# EUROPEAN PATENT SPECIFICATION

(11) **EP 2 420 126 B1**
(45) Date of publication and mention of the grant of the patent: **06.11.2013**
(21) Application number: 10173231.1
(22) Date of filing: 18.08.2010
(51) Int. Cl.: A01D 41/14

(54) **Combine header with gauge wheels to control cut height**
Mähdrescherschneidwerk mit Messrädern zur Kontrolle der Schneidhöhe
Combinaison de collecteur et de roulettes de terrage pour contrôler la hauteur de coupe

(43) Date of publication of application: 22.02.2012
(73) Proprietor: MACDON INDUSTRIES LTD, Winnipeg, Manitoba R3J 3S3 (CA)
(72) Inventor: Talbot, Francois R., Winnipeg, Manitoba R2N 3M5 (CA)
(74) Representative: Jostarndt, Hans-Dieter

(56) References cited:
- EP-A1- 1 611 781
- EP-A2- 2 156 725
- GB-A- 1 097 865
- GB-A- 1 168 967

## Description

This invention relates to a header for a combine harvester where the header includes ground engaging gauge wheels to provide stability to the header when cutting off the ground.

### BACKGROUND OF THE INVENTION

Typically headers for combine harvesters are mounted on the feeder house of the combine with the mounting arrangement providing a floating action of the header relative to the feeder house so that the cutter bar can rest on the ground and float over the ground in a cutting action.

In some cases an automatic header height control system is provided with header to feeder house position indicators which allow the header to automatically adjust flotation to ground conditions, eliminating the need for the operator to make constant adjustments.

In some cases however it is desirable to provide a cutting action at a position where the cutter bar is at a raised height so that no stability is provided by engagement with the ground. In this arrangement, the header is typically provided with ground engaging gauge wheels at or adjacent respective ends of the header to gauge a required height from the ground

This is normally done with gauge wheels that carry part of the weight of the header, with the rest carried by the main suspension, with springs on the gauge wheels in order to absorb the high shock loads when hitting a bump, and in order to provide some adjustment of cutter bar height while maintaining wheel engagement with the ground.

One of the issues with this system is to provide sufficient stability of the header when cutting at the raised height and while traveling at higher cutting speeds.

Some of the different ways to do this and their problems include:
Gauge wheel with a soft spring, however this does not provide enough header stability;
Gauge wheel with a stiff spring, this provides more stability but the stiff spring action can "throw" the header up to an unacceptable degree;
Gauge wheel with a stiff spring as above but combined with a shock absorber, this is better than the spring alone as above, but there remain issues with stability;
Gauge wheel mounted solid on the header, this does not allow changing the height of the cutter bad while maintaining ground contact with the gauge wheel s and causes huge shock loads;
Ground sensors in place of the gauge wheels to provide direct control signals to the suspension system, but this system does not react quickly enough to provide the required control and stability. Also, with ground sensors the header has to be positioned on a bottom stop when cutting off the ground so that the header is effectively fixed relative to the combine. As a result, when the combine goes over bumps, the oscillation of the combine causes the header to move up and down, causing an irregular cut.

EP 2156725 discloses a combine harvester comprising:
a cab and a feeder house;
a header having a cutter bar for cutting standing crop and a crop transport device for transporting the standing crop inwardly from ends of the header to a collection location for feeding to the feeder house of the combine harvester;
an adapter mounting the header on the feeder house of the combine harvester;
the adapter being arranged so as to control feed of the crop at the collection location into the feeder house to the combine harvester;
the adapter being arranged such that the header is carried on the feeder house for movement of the header with the combine harvester over the field to be harvested;
at least two ground engaging gauge wheels on the header one on each side of the adapter;
each gauge wheel being mounted on the header for up and down adjustment movement of a position of the gauge wheel relative to the header to control the height of the cutter bar of the header from the ground;
each gauge wheel having a respective adjustable link operable by a control switch arranged to be located in the cab of the combine harvester to adjust the position of the gauge wheel relative to the header to a required position so as to adjust a height of cut of the cutter bar;
wherein the gauge wheels are mounted on the header such that, when adjusted to the required position, the gauge wheels are fixed relative to the header substantially without any suspension floating movement relative thereto;
a suspension system for carrying the header on the adapter;
the suspension system being arranged such that a major part of the weight of the header is carried on the feeder house and a smaller part is carried on the gauge wheels;
wherein the suspension system is connected between the adapter and the header;
and a bottom stop arranged to limit downward movement of the header relative to the adapter.

### SUMMARY OF THE INVENTION

It is one object of the invention to provide a combine harvester where the header is supported on spring arms and includes ground engaging gauge wheels to provide stability to the header when cutting off the ground.

According to invention the combine harvester is characterized in that:
the suspension system (30) includes two side suspension arms (33, 34) with each suspension arm having a respective mechanical spring to allow movement of the header at least upwardly and downwardly relative to the adapter;
there is provided a float distance sensor (39) for sensing changes in a float distance relative to the bottom stop (38) of the adapter of the header and for generating a signal indicative of the sensed changes in said float distance;
and there is provided an automatic header height control system (40) which receives the signal from the float distance sensor (39) and acts to raise and lower the feeder house (14) in response to the signal from the float distance sensor (39) so as to raise and lower the feeder house (14) relative to the header and attempt to maintain the float distance at a required set value.

It is important that the adjustable links move in synchronism and this can be achieved using a master and slave cylinder.

The suspension system is generally arranged such that upward movement of the feeder house acts to reduce the separation between the header and the adapter and downward movement of the feeder house acts to increase the separation between the header and the adapter.

Preferably the adjustable link is a hydraulic cylinder. However an electric actuator or other adjustable system operable from the cab could be used.

Preferably the suspension system is adjustable so as to set a required proportion of the weight of the header which is carried on the feeder house relative to a proportion of the weight of the header which is carried on the gauge wheels.

Preferably the suspension system is arranged such that the proportion of the weight which is carried on the feeder house is of the order of 90%.

Thus in the arrangement as described hereinafter, the gauge wheel which can be adjusted from inside the cab is used in combination with an Automatic Header Height Control so that:
a) the main suspension is adjusted to carry approximately 90% of the header weight
b) the header is dropped on the ground until the gauge wheels contact the ground, and causes the header to "float" with respect to the main carrier frame;
c) The AHHC is set so that the combine feeder house stops lowering when a pre-set amount of header to adapter separation (float) is achieved.

This allows the header to move up and down smoothly to follow the ground contour.

To change the cutting height, the cylinders attached to the gauge wheels are operated. The AHHC then causes the main lift cylinders to react so that the pre-set float is maintained.

The arrangement described hereinafter may have one or more of the following advantages:
It follows ground contour without having to carry excessive weight with the gauge wheel;

The cutting height is adjustable from the combine cab through the whole cutting range without changing the header angle;

With the AHHC, the weight carried by the gauge wheel is the same through the cutting range;

With separation between the header and the adapter, the movement of the combine from going over uneven terrain does not cause the header to move up and down, thus maintaining a more even cut height.

### BRIEF DESCRIPTION OF THE DRAWINGS

One embodiment of the invention will now be described in conjunction with the accompanying drawings in which:

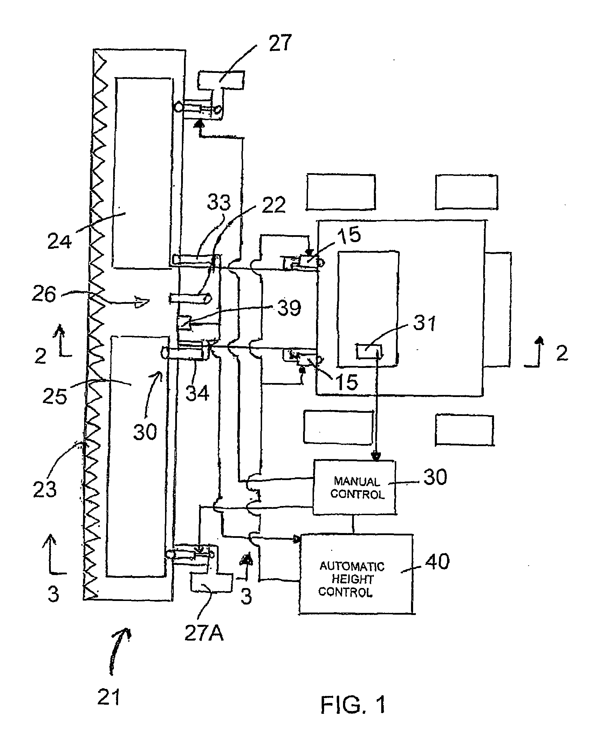

Figure 1 is a schematic pan view of a combine harvester including a header assembly according to the present invention.

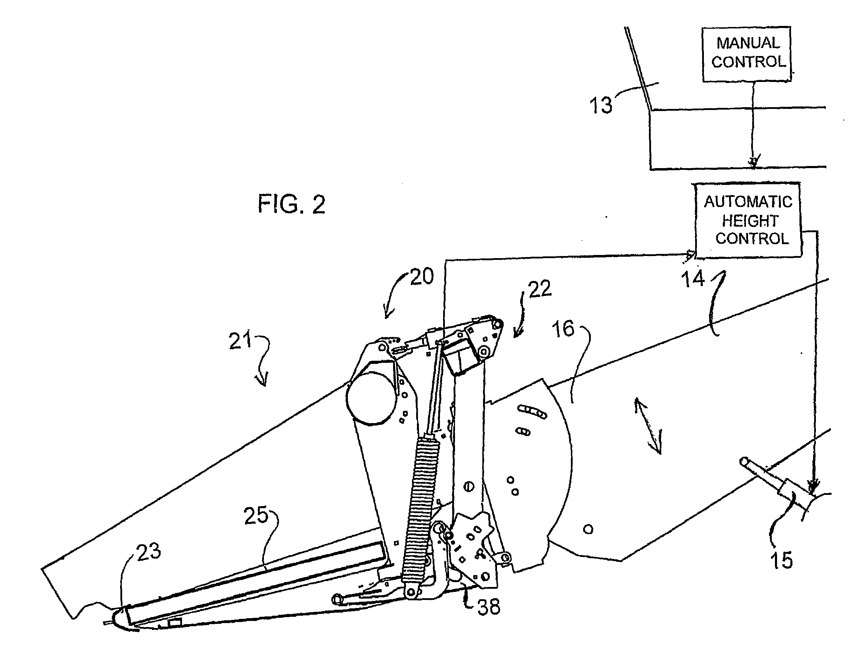

Figure 2 is a schematic cross sectional view along the lines 3-3 of Figure 1.

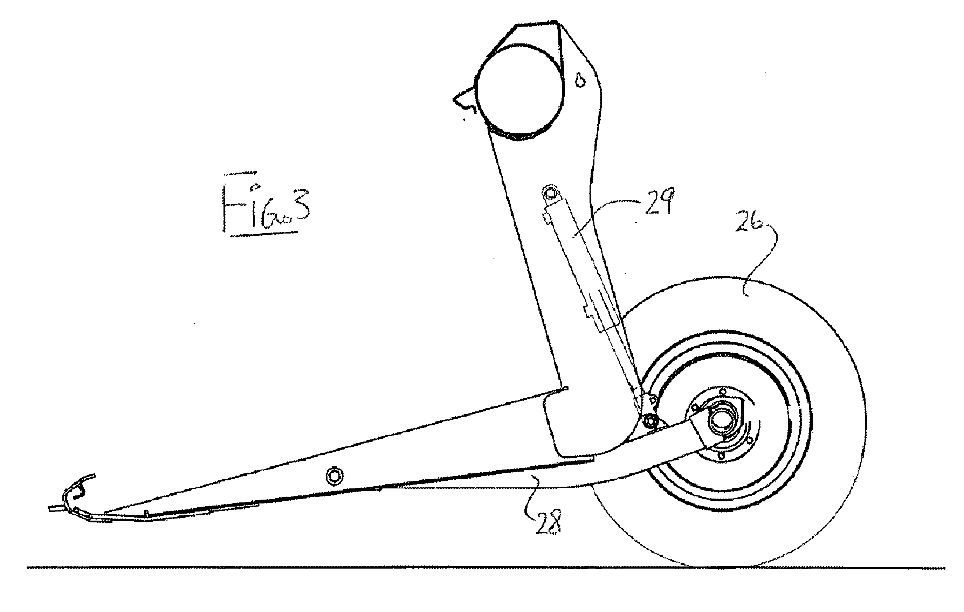

Figure 3 is a schematic cross sectional view along the lines 2-2 of Figure 1.

In the drawings like characters of reference indicate corresponding parts in the different figures.

### DETAILED DESCRIPTION

A combine harvester is shown schematically at 10 and includes ground wheels 11, a main housing 12 containing the crop processing devices, a cab 13 for the operator and a feeder house 14 for receiving the crop material and feeding it into the housing for processing. The details of combine harvesters are well known to a person skilled in this art so that no detail is necessary for an understanding of this invention.

The feeder house is mounted on the housing in a manner which allows it to be raised and lowered to lift the header carried on the front of the combine. For example the feeder house includes cylinders 15 which raise and lower the front end 16 of the feeder house.

The present invention is particularly directed to the construction of the header assembly 20 for attachment to the feeder house of the combine harvester.

The whole header assembly 20 includes a header 21 and an adapter 22 which attaches the header to the feeder house. The adapter is provided to control the feeding of material into the feeder house and to provide a lifting force to the header to carry it forwardly on the front of the feeder house.

The header is generally of a conventional construction well known to a person skilled in this art and the major components include a cutter bar 23 for cutting standing crop and a crop transport device defined by a pair of drapers 24 and 25 for transporting the standing crop inwardly from ends of the header to a collection location 26 for feeding to the combine harvester.

The header includes two ground engaging gauge wheels 26 and 27 on the header one on each side of the adapter 21. The number of wheels can be increased in some cases so that double wheels are used or wheels on an axle but in generally the wheels act so support the header on each side of the support from the adapter.

Each gauge wheel is mounted on the header for up and down adjustment movement of a position of the gauge wheel relative to the header to control the height of the cutter bar of the header from the ground. Thus in the example shown the wheel is mounted on a pivot arm 28 pivotally mounted on the header frame so that the arm projects rearwardly from the rear of the frame with the wheel at the rear end. The arm 28 is attached to the frame by an adjustable link which is typically a cylinder 29 operable by a control switch or manual control 30 including a manual switch 31 arranged to be located in the cab 13 of the combine harvester to adjust the position of the gauge wheel relative to the header to a required position so as to adjust the height of cut of the cutter bar from the ground.

The gauge wheels 26 and 27 are fixed to the cylinders which are fixed to the frame so that the wheels are mounted on the header such that, when adjusted to the required position, the gauge wheels are fixed relative to the header substantially without any suspension floating movement relative thereto. Thus there are no springs or suspension movements allowed and the wheel is rigid to the frame.

The connection between the adapter and the header includes a suspension system 30 with a center top link 32 and two side suspension arms 33 and 34 for carrying the header on the adapter. As is well known, the suspension arrangement allows side to side pivotal movement of the header relative to the adapter as well as vertical floating movement of the header. Thus the suspension arms 33 and 34 include springs which have a spring force which can be adjusted to vary the lifting force applied to the header from the adapter.

Thus the suspension system is adjustable so as to set a required proportion of the weight of the header which is carried on the feeder house relative to a proportion of the weight of the header which is carried on the gauge wheels.

The springs of the suspension system are arranged such that a major part of the weight of the header is carried on the feeder house and a smaller part is carried on the gauge wheels and typically the proportion of the weight which is carried on the feeder house is of the order of 90%.

The suspension may be arranged such that upward movement of the feeder house acts to increase a lifting force to the header and downward movement of the feeder house acts to decrease the lifting force to the header and/or such that upward movement of the feeder house acts to reduce the separation between the header and the adapter and downward movement of the feeder house acts to increase the separation between the header and the adapter, although these may not occur depending on the mechanical arrangement or may not occur in all parts of the range of movement.

A bottom stop 38 is provided which is arranged to limit downward movement of the header relative to the adapter and a float sensor 39 is provided for sensing a float distance of the header relative to the bottom stop and for generating a signal indicative thereof.

An automatic header height control system 40 is provided which is arranged to raise and lower the feeder house in response to the signal from the float sensor so as to attempt to maintain the float distance at a required set value. The set value is selected so that the header is free to float between the bottom stop and an upper limit of movement both upwardly and downwardly to an extent to accommodate changes in ground height. Thus the distance of the header from the ground is controlled by the gauge wheels and the weight of the header is primarily carried on the suspension of the feeder house. In the event that the set float distance from the bottom stop decreases because the header has moved downwardly relative to the feeder house, the lift cylinders 15 and 16 are operated by the automatic height control to lower the feeder house. In the event that the set float distance from the bottom stop increases because the header has moved upwardly relative to the feeder house, the lift cylinders 15 and 16 are operated by the automatic height control to raise the feeder house. The automatic header height control system is known to a person skilled in the art so that further details of the electronics necessary to effect the necessary controls is not required.

In operation, the header is dropped on the ground until the gauge wheels contact the ground, and causes the header to "float" with respect to the main carrier frame. The AHHC is set so that the combine feeder house stops lowering when the pre-set amount of header to adapter separation (float) is achieved. This allows the header to move up and down smoothly to follow the ground contour. To change the cutting height, the cylinders attached to the gauge wheels are operated. The AHHC then causes the main lift cylinders to react so that the pre-set float is maintained.

Since various modifications can be made in my invention as herein above described, and many apparently widely different embodiments of same made within the spirit and scope of the claims without department from such spirit and scope, it is intended that all matter contained in the accompanying specification shall be interpreted as illustrative only and not in a limiting sense.

## Claims

1. A combine harvester (10) comprising:
a cab (13) and a feeder house (14);
a header (21) having a cutter bar (23) for cutting standing crop and a crop transport device (24) for transporting the standing crop inwardly from ends of the header to a collection location for feeding to the feeder house (14) of the combine harvester;
an adapter (22) mounting the header (21) on the feeder house (14) of the combine harvester;
the adapter (22) being arranged so as to control feed of the crop at the collection location into the feeder house to the combine harvester;
the adapter (22) being arranged such that the header (21) is carried on the feeder house (14) for movement of the header (21) with the combine harvester (10) over the field to be harvested;
at least two ground engaging gauge wheels (26, 27) on the header one on each side of the adapter (22);
each gauge wheel (26, 27) being mounted on the header (21) for up and down adjustment movement of a position of the gauge wheel (26, 27) relative to the header to control the height of the cutter bar (23) of the header from the ground;
each gauge wheel (26, 27) having a respective adjustable link (29) operable by a control switch (30) arranged to be located in the cab (13) of the combine harvester to adjust the position of the gauge wheel (26, 27) relative to the header to a required position so as to adjust a height of cut of the cutter bar (23);
wherein the gauge wheels (26, 27) are mounted on the header such that, when adjusted to the required position, the gauge wheels (26, 27) are fixed relative to the header substantially without any suspension floating movement relative thereto;
a suspension system (30) for carrying the header on the adapter;
the suspension system (30) being arranged such that a major part of the weight of the header is carried on the feeder house (14) and a smaller part is carried on the gauge wheels (26, 27);
wherein the suspension system (30) is connected between the adapter (22) and the header;
and a bottom stop (38) arranged to limit downward movement of the header (21) relative to the adapter (22);
**characterized in that** the suspension system (30) includes two side suspension arms (33, 34) with each suspension arm having a respective mechanical spring to allow movement of the header at least upwardly and downwardly relative to the adapter;
there is provided a float distance sensor (39) for sensing changes in a float distance relative to the bottom stop (38) of the adapter of the header and for generating a signal indicative of the sensed changes in said float distance;
and there is provided an automatic header height control system (40) which receives the signal from the float distance sensor (39) and acts to raise and lower the feeder house (14) in response to the signal from the float distance sensor (39) so as to raise and lower the feeder house (14) relative to the header and attempt to maintain the float distance at a required set value.

2. The header assembly according to Claim 1 wherein the adjustable link (29) is a hydraulic cylinder.

3. The header assembly according to Claim 1 or 2 wherein the suspension system (30) is adjustable so as to set a required proportion of the weight of the header which is carried on the feeder house relative to a proportion of the weight of the header which is carried on the gauge wheels (26, 27).

4. The header assembly according to Claim 1, 2 or 3 wherein the suspension system (30) is arranged such that the proportion of the weight which is carried on the feeder house is of the order of 90%.

## Patentansprüche

1. Mähdrescher (10), der umfasst:
ein Führerhaus (13) und einen Bereich für einen Förderer (14);
einen Erntevorsatz (21) mit einem Mähbalken (23) zum Mähen von Getreide auf dem Halm und eine Getreidetransportvorrichtung (24) zum Transportieren des Getreides auf dem Halm von den Enden des Erntevorsatzes nach innen zu einem Sammelort, um es dem Bereich für einen Förderer (14) des Mähdreschers zuzuführen;
ein Zwischenstück (22), mit dem der Erntevorsatz (21) an dem Bereich für einen Förderer (14) des Mähdreschers angebracht ist;
wobei das Zwischenstück (22) so ausgelegt ist, dass es die Zufuhr des Getreides bei dem Sammelort in den Bereich für einen Förderer zu dem Mähdrescher steuert;
wobei das Zwischenstück (22) so ausgelegt ist, dass der Erntevorsatz (21) zur Bewegung des Erntevorsatzes (21) mit dem Mähdrescher (10) über das zu erntende Feld an dem Bereich für einen Förderer (14) getragen ist;
wenigstens zwei Stützräder (26, 27) an dem Erntevorsatz, eines auf jeder Seite des Zwischenstücks (22), die mit dem Boden in Eingriff sind;
wobei jedes Stützrad (26, 27) zur Aufwärts- und Abwärtsnachstellbewegung einer Stellung des Stützrads (26, 27) relativ zu dem Erntevorsatz an dem Erntevorsatz (21) angebracht ist, um die Höhe des Mähbalkens (23) des Erntevorsatzes von dem Boden zu steuern;
wobei jedes Stützrad (26, 27) ein jeweiliges nachstellbares Glied (29) aufweist, das durch einen Steuerschalter (30) betreibbar ist, der so angeordnet ist, dass er sich in dem Führerhaus (13) des Mähdreschers befindet, um die Stellung des Stützrads (26, 27) relativ zu dem Erntevorsatz auf eine geforderte Stellung nachzustellen, um eine Schnitthöhe des Mähbalkens (23) nachzustellen;
wobei die Stützräder (26, 27) in der Weise an dem Erntevorsatz angebracht sind, dass die Stützräder (26, 27), wenn sie in die geforderte Stellung nachgestellt werden, relativ zu dem Erntevorsatz im Wesentlichen ohne irgendeine Verschiebung der Aufhängung relativ dazu befestigt sind;
ein Aufhängungssystem (30), um den Erntevorsatz an dem Zwischenstück zu tragen;
wobei das Aufhängungssystem (30) so ausgelegt ist, dass ein größter Teil des Gewichts des Erntevorsatzes an dem Bereich für einen Förderer (14) getragen ist und ein kleinerer Teil an den Stützrädern (26, 27) getragen ist;
wobei das Aufhängungssystem (30) zwischen dem Zwischenstück (22) und dem Erntevorsatz verbunden ist;
und einen unteren Anschlag (38), der so ausgelegt ist, dass er die Bewegung des Erntevorsatzes (21) relativ zu dem Zwischenstück (22) nach unten begrenzt;
**dadurch gekennzeichnet, dass** das Aufhängungssystem (30) zwei seitliche Tragarme (33, 34) enthält, wobei jeder Tragarm eine jeweilige mechanische Feder aufweist, um die Bewegung des Erntevorsatzes relativ zu dem Zwischenstück wenigstens nach oben und nach unten zu ermöglichen;
wobei ein Schwebeentfernungssensor (39) zum Erfassen von Änderungen einer Schwebeentfernung relativ zu dem unteren Anschlag (38) des Zwischenstücks des Erntevorsatzes und zum Erzeugen eines Signals, das die erfassten Änderungen der Schwebeentfernung angibt, bereitgestellt ist;
und wobei ein automatisches Erntevorsatz-Höhensteuersystem (40) bereitgestellt ist, das das Signal von dem Schwebeentfernungssensor (39) empfängt und das in der Weise wirkt, dass es den Bereich für den Förderer (14) in Ansprechen auf das Signal von dem Schwebeentfernungssensor (39) in der Weise anhebt und absenkt, dass der Bereich für den Förderer (14) relativ zu dem Erntevorsatz angehoben und abgesenkt wird und dass versucht wird, die Schwebeentfernung auf einem geforderten Sollwert zu halten.

2. Erntevorsatzanordnung nach Anspruch 1, wobei das nachstellbare Glied (29) ein Hydraulikzylinder ist.

3. Erntevorsatzanordnung nach Anspruch 1 oder 2, wobei das Aufhängungssystem (30) in der Weise nachstellbar ist, dass ein geforderter Gewichtsanteil des Erntevorsatzes, der an dem Bereich für einen Förderer getragen ist, relativ zu einem Gewichtsanteil des Erntevorsatzes, der an den Stützrädern (26, 27) getragen ist, eingestellt wird.

4. Erntevorsatzanordnung nach Anspruch 1, 2 oder 3, wobei das Aufhängungssystem (30) so ausgelegt ist, dass der Gewichtsanteil, der an dem Bereich für einen Förderer getragen ist, in der Größenordnung von 90 % liegt.

## Revendications

1. Moissonneuse-batteuse (10) comprenant :
une cabine (13) et un compartiment de dispositif convoyeur (14) ;
un collecteur (21) disposant d'une barre de coupe (23) pour couper une récolte sur pied et un dispositif de transport de la récolte (24) pour transporter la récolte sur pied vers l'intérieur, des extrémités du collecteur à un emplacement de collecte, en vue de son convoyage vers le compartiment de dispositif convoyeur (14) de la moissonneuse-batteuse ;
un adaptateur (22) pour le montage du collecteur (21) sur le compartiment du dispositif convoyeur (14) de la moissonneuse-batteuse ;
l'adaptateur (22) étant configuré pour contrôler le convoyage de la récolte à l'emplacement de collecte dans le compartiment de dispositif convoyeur de la moissonneuse-batteuse ;
l'adaptateur (22) étant configuré de telle sorte que le collecteur (21) soit porté sur le compartiment de dispositif convoyeur (14) pour le déplacement du collecteur (21) avec la moissonneuse-batteuse (10) sur le champ à récolter ;
au moins deux roulettes de terrage (26, 27) en prise avec le sol sur le collecteur, une de chaque côté de l'adaptateur (22) ;
chaque roulette de terrage (26, 27) étant montée sur le collecteur (21) de façon à ce que la position de la roulette de terrage (26, 27) par rapport au collecteur puisse être réglée par déplacement vers le haut ou vers le bas afin de contrôler la hauteur de la barre de coupe (23) du collecteur par rapport au sol ;
chaque roulette de terrage (26, 27) ayant une liaison réglable respective (29) actionnable par un sélecteur (30) prévu pour être installé dans la cabine (13) de la moissonneuse-batteuse pour régler la position de la roulette de terrage (26, 27) par rapport au collecteur dans une position requise afin de régler la hauteur de coupe de la barre de coupe (23) ;
les roulettes de terrage (26, 27) étant montées sur le collecteur de telle sorte que lorsqu'elles sont réglées dans la position requise, les roulettes de terrage (26, 27) sont fixes par rapport au collecteur pratiquement sans aucun mouvement de flottement de suspension par rapport à celui-ci ;
un système de suspension (30) pour porter le collecteur sur l'adaptateur ;
le système de suspension (30) étant configuré de telle sorte qu'une majeure partie du poids du collecteur soit portée sur le compartiment de dispositif convoyeur (14) et qu'une petite partie du poids soit portée sur les roulettes de terrage (26, 27) ;
le système de suspension (30) étant raccordé entre l'adaptateur (22) et le collecteur ;
et une butée inférieure (38) configurée pour limiter le déplacement vers le bas du collecteur (21) par rapport à l'adaptateur (22) ;
**caractérisé en ce que** le système de suspension (30) comprend deux bras de suspension latéraux (33, 34), chaque bras de suspension ayant un ressort mécanique respectif permettant le déplacement du collecteur au moins vers le haut et vers le bas par rapport à l'adaptateur ;
**en ce qu'**un capteur de distance de flottement (39) est prévu pour détecter les variations de la distance de flottement par rapport à la butée inférieure (38) de l'adaptateur du collecteur et pour générer un signal indicateur des variations détectées de ladite distance de flottement ;
et **en ce qu'**un système de contrôle automatique de la hauteur du collecteur (40) est prévu pour recevoir le signal du capteur de distance de flottement (39) et pour agir en conséquence pour lever et abaisser le compartiment de dispositif convoyeur (14) en réponse au signal du capteur de distance de flottement (39), de manière à lever et abaisser le compartiment de dispositif convoyeur (14) par rapport au collecteur et à tenter de maintenir la distance de flottement à une valeur de consigne requise.

2. Ensemble collecteur selon la revendication 1, dans lequel la liaison réglable (29) est un vérin hydraulique.

3. Ensemble collecteur selon la revendication 1 ou 2, dans lequel le système de suspension (30) est réglable de manière à définir une proportion requise du poids du collecteur qui est porté sur le compartiment de dispositif convoyeur par rapport à une proportion du poids du collecteur qui est porté sur les roulettes de terrage (26, 27).

4. Ensemble collecteur selon la revendication 1, 2 ou 3, dans lequel le système de suspension (30) est configuré de sorte que la proportion du poids qui est porté sur le compartiment de dispositif convoyeur soit de l'ordre de 90 %.
